# EUROPÄISCHE PATENTSCHRIFT

(11) **EP 0 961 679 B1**
(45) Veröffentlichungstag und Bekanntmachung des Hinweises auf die Patenterteilung: **10.10.2001**
(21) Anmeldenummer: 98903996.1
(22) Anmeldetag: 07.01.1998
(51) Int. Cl.: B29C 49/24

(54) **VERFAHREN ZUR HERSTELLUNG VON KUNSTSTOFF-BAUTEILEN**
METHOD FOR PRODUCING PLASTIC COMPONENTS
PROCEDE DE PRODUCTION D'ELEMENTS CONSTITUTIFS EN PLASTIQUE

(30) Priorität: 21.02.1997 DE 19706849
(43) Veröffentlichungstag der Anmeldung: 08.12.1999
(73) Patentinhaber: Möller Plast GmbH, 33649 Bielefeld (DE)
(72) Erfinder: BECKMANN, Friedhelm, D-32120 Hiddenhausen (DE)
(74) Vertreter: Schirmer, Siegfried, Dipl.-Ing.
(86) Internationale Anmeldenummer: DE9800016
(87) Internationale Veröffentlichungsnummer: WO9836892

(56) Entgegenhaltungen:
- EP-A- 0 595 158
- WO-A-88/08361
- DE-A- 4 342 729
- US-A- 5 271 882
- US-A- 5 344 305
- PATENT ABSTRACTS OF JAPAN vol. 010, no. 342 (M-536), 19.November 1986 & JP 61 144328 A (TOYODA GOSEI CO LTD), 2.Juli 1986,
- PATENT ABSTRACTS OF JAPAN vol. 014, no. 450 (M-1030), 27.September 1990 & JP 02 179721 A (DAIKYO INC), 12.Juli 1990,
- PATENT ABSTRACTS OF JAPAN vol. 014, no. 447 (M-1029), 25.September 1990 & JP 02 178018 A (TOPPAN PRINTING CO LTD), 11.Juli 1990,
- PATENT ABSTRACTS OF JAPAN vol. 015, no. 228 (M-1123), 11.Juni 1991 & JP 03 069335 A (YAMAHISA:KK), 25.März 1991,
- PATENT ABSTRACTS OF JAPAN vol. 012, no. 126 (M-687), 19.April 1988 & JP 62 251122 A (TERAOKA SEISAKUSHO:KK), 31.Oktober 1987,
- PATENT ABSTRACTS OF JAPAN vol. 010, no. 191 (M-495), 4.Juli 1986 & JP 61 035930 A (INOUE MTP CO LTD), 20.Februar 1986,
- PATENT ABSTRACTS OF JAPAN vol. 013, no. 305 (M-849), 13.Juli 1989 & JP 01 095027 A (KOJIMA PRESS CO LTD), 13.April 1989,
- PATENT ABSTRACTS OF JAPAN vol. 011, no. 348 (M-642), 14.November 1987 & JP 62 128730 A (MITSUBISHI MOTORS CORP), 11.Juni 1987,
- PATENT ABSTRACTS OF JAPAN vol. 011, no. 094 (M-574), 25.März 1987 & JP 61 246036 A (KYORAKU CO LTD), 1.November 1986,

## Beschreibung

Die Erfindung betrifft ein Verfahren zur Herstellung von Kunststoffbauteilen, die durch Blasformen ausgebildet und vorzugsweise an Teilflächen mit einem Dekormaterial beschichtet werden, wobei zunächst das Dekormaterial im kalten bzw. erwärmten Zustand verpreßt wird und das so hergestellte Verbund-Dekorelement in ein Blasformwerkzeug eingebracht und beim Blasformen des Bauteils mit dessen Außenfläche verpreßt und verschmolzen wird.

Im Blasformverfahren hergestellte Bauteile aus Kunststoff werden zur Erzielung einer optisch und haptisch gefälligen Oberfläche mit einem Dekormaterial beschichtet, das zur Verbesserung der Haptik, z. B. durch eine weiche, elastisch nachgiebige Fläche zusätzlich mit einer Schaumstoffschicht hinterfüttert ist.

üblicherweise werden die Bauteile in einem ersten Verfahrensschritt nach dem Extrusionsblasverfahren aus einem extrudierten Kunststoffschlauch hergestellt. Derart gebildete Bauteile verfügen bekanntlich über eine hohe Steifigkeit, und während des Blasformprozesses können gleichzeitig verschiedene Funktionselemente, wie Luftkanäle, mechanische Führungen, Befestigungsmittel, Ablagefächer und dergleichen angeformt werden.

Das Anbringen des Dekormaterials erfolgt in einem zweiten Verfahrensschritt durch Kleben, was jedoch insofern aufwendig ist, als bei Verwendung von Polypropylen eine Aktivierung der Oberfläche des Bauteils zur Gewährleistung der Klebeeigenschaften erforderlich ist und das Auftragen des Klebers in bestimmten Teilbereichen ebenfalls Schwierigkeiten bereitet, da hierfür der Einsatz von Schablonen notwendig ist oder die Grenz- bzw. Randbereiche des Bauteils abgeklebt werden müssen.

Neben der aufwendigen Arbeitsweise sind die bekannten Verfahren zur Herstellung von Kunststoff-Bauteilen mit Dekorflächen noch insoweit nachteilig, als ein einfaches Recycling verbrauchter Bauteile nicht gewährleistet ist.

Aus der JP-A-62128730 ist es bekannt, ein Kunststoff-Bauteil im Blasformverfahren herzustellen und mit einer Dekorschicht zu beschichten. Zu diesem Zweck wird ein Schlauch extrudiert und in einem Kalander eine Dekorschicht hergestellt. Anschließend werden Schlauch und Dekorschicht in eine Form eingezogen. In der geschlossenen Form wird der Schlauch expandiert und verbindet sich dabei fest mit der Dekorschicht.

In der EP-A-0 595 158 ist ein Verfahren offenbart, um Hohlkörper, die im Blasverfahren aus thermoplastischem Kunststoff hergestellt sind, mit einem Zusatzteil zu versehen. Zu diesem Zweck wird das Zusatzteil in die Blasform eingelegt und mittels eines Heizelementes vorgewärmt. Bei der Aufweitung des Vorformlings kommt dieser mit dem Zusatzteil in Berührung und geht mit diesem eine Schweißverbindung ein.

In der JP-A-02178018 ist ein Verfahren zur Herstellung eines Behälters im Blasverfahren beschrieben. Nach diesem Verfahren wird in die Blasform ein Etikett eingelegt, das auf dessen Rückseite mit einem wärmeaktivierten Kleber versehen ist. Bei der Expansion des Vorformlings geht das Etikett eine Klebeverbindung mit dem fertigen Behälter ein.

Auch die US-A-5 344 305 betrifft ein Verfahren zur Herstellung eines Behälters im Blasverfahren, wobei sich der Behälter während der Expansion in der Blasform mit einem Etikett verbindet. Zu diesem Zweck sind die Etiketten auf der Rückseite mit einem wärmeaktivierten Kleber versehen. Die Etiketten liegen in Form einer Rolle vor und werden in einer Schneidevorrichtung aus dem abgerollten Bandmaterial einzeln ausgeschnitten und mittels einer Vorrichtung in die Blasform eingesetzt.

Von diesem Stand der Technik ausgehend liegt der Erfindung die Aufgabe zugrunde, ein Verfahren zur Herstellung auf Teilflächen beschichteter Blasformteile anzugeben, das mit geringem Aufwand eine auch in Grenz- bzw. Randbereichen exakt ausgeführte Beschichtung mit einem Oberflächendekor ermöglicht.

Erfindungsgemäß wird die Aufgabe dadurch gelöst, daß während der Blasformgebung in dem dem Rand des Verbund-Dekorelementes entsprechenden Bereich des Bauteils eine Ziernut zur Aufnahme des Randes des Verbund-Dekorelementes ausgeformt wird.

Auf diese Weise können Kunststoff-Bauteile mit schaumstoffhinterfütterten Dekorbereichen schnell und mit geringem Arbeitsaufwand sowie in hoher Qualität hergestellt werden. Das erfindungsgemäße Verfahren hat insbesondere den Vorteil, daß der Rand des Verbund-Dekorelementes in der Ziernut versenkt ist, so daß ein exakt abgegrenzter Übergangsbereich zwischen der beschichteten Teilfläche und der unbeschichteten Oberfläche des Blasformteils erzielt wird.

In weiterer Ausbildung der Erfindung kann das vorgefertigte Verbund-Dekorelement bereits entsprechend der Kontur des betreffenden Bauteils vorgeformt sein.

Nach einem noch anderen Merkmal der Erfindung wird das Verbund-Dekorelement plan zusammengepreßt und beim Blasformen gemeinsam mit dem zu bildenden Bauteil verformt und dabei mit dessen Außenfläche verbunden, jedoch gegebenenfalls zuvor erwärmt.

Nach einem weiteren Merkmal der Erfindung wird das Kunststoff-Bauteil samt schaumstoffhinterfütterter Dekorbeschichtung aus einem Einstoffsystem aus Polypropylen gebildet, wobei das Verbund-Dekorelement aus Polypropylen-Textil als Dekormaterial sowie aus extrudiertem und/oder expandiertem Polypropylen als Schaumstoffhinterfütterung besteht. Als Dekormaterial kann aber auch thermoplastisches Polyolefin und dergleichen oder Kunstleder, Leder und ähnliches Material eingesetzt werden.

Nach dem vorliegenden Verfahren können somit teilbeschichtete Bauteile hergestellt werden, die hohen Anforderungen an die ästhetische Gestaltung, Haptik und Haltbarkeit der Beschichtung sowie bezüglich eines einfachen Recyclings gerecht werden und zudem mit geringem Aufwand hergestellt werden können.

Weitere Merkmale und vorteilhafte Weiterbildungen der Erfindung sind in den Unteransprüchen aufgeführt.

Ein Ausführungsbeispiel der Erfindung wird anhand der Zeichnung näher erläutert. Es zeigen:
- Fig. 1: ein nach dem Blasformverfahren hergestelltes doppelwandiges Bauteil mit einem auf einer Teilfläche angebrachten schaumstoffhinterfütterten Oberflächendekor; und
- Fig. 2: ein doppelwandiges Bauteil gemäß Fig. 1, jedoch mit einer zweiten Schaumstoffschicht zwischen der Außenfläche des Blasformteils (Bauteil) und dem Dekormaterial.

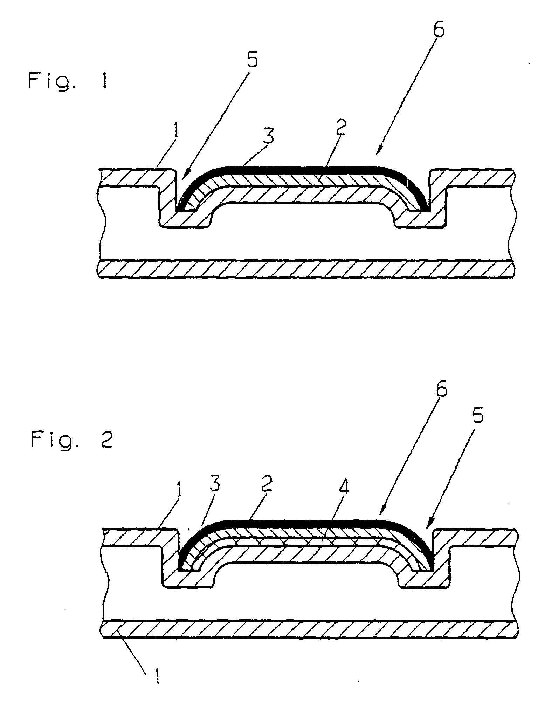

Gemäß Fig. 1 ist eine Teilfläche eines doppelwandigen Bauteils 1 aus Kunststoff mit einem Dekormaterial 3 beschichtet, das mit einer Schaumstoffschicht 2 hinterfüttert ist. Während das Dekormaterial 3 unter rein gestalterischen Gesichtspunkten angeordnet ist, dient die Schaumstoffschicht 2 der Verbesserung der Haptik im Bereich der beschichteten Teilfläche. Zur Erzielung eines exakt abgegrenzten Übergangsbereichs zwischen der beschichteten Teilfläche und der unbeschichteten Oberfläche des Blasformteils ist in dem Bauteil 1 (Blasformteil) im Bereich des Randes des Dekormaterials 1 eine Ziernut 5 ausgebildet, in die der abgebogene Rand des Dekormaterials 3 einschließlich der Schaumstoffhinterfütterung (Schaumstoffschicht), die gemeinsam ein Verbund-Dekorelement 6 bilden, eingeschlossen ist. Bei der Ausführungsvariante nach Fig. 1 besteht das Bauteil 1 aus Polypropylen, während das Dekormatarial 3 Polypropylen-Textil ist und für die Schaumstoffschicht extrudierter Polypropylen-Schaum (X-PP) verwendet wird. Ein derart auf Polypropylenbasis ausgebildetes Bauteil wird den gestellten ästhetischen und haptischen Anforderungen gerecht und ist für ein späteres Recycling hervorragend geeignet.

Bei der in Fig. 2 gezeigten Ausführungsform ist die Haptik der beschichteten Teilfläche des Bauteils 1 durch die Anordnung von zwei Schaumstoffschichten 2 und 4 weiter verbessert. Die zweite Schaumstoffschicht 4 besteht in diesem Fall aus expandiertem Polypropylen (E-PP) .

Die Herstellung von Bauteilen in den oben beschriebenen Ausführungsvarianten erfolgt in der Weise, daß zunächst ein extrudierter und/oder ein expandierter Polypropylenschaum an der Oberfläche auf eine im Schmelzbereich dieses Werkstoffes liegende Temperatur erwärmt und an der aufgeschmolzenen Oberfläche mit dem Dekormaterial aus Polypropylen-Textil zu einem Verbund-Dekorlement 6 verpreßt und verschweißt und entsprechend der Endkontur des Bauteils 1 vorgeformt wird. Beim Verpressen dringt der angeschmolzene Schaum aus Polypropylen in die Oberfläche des Dekormaterials ein und geht mit diesem eine feste Verbindung ein. Anschließend wird das vorgeformte Verbund-Dekorelement aus Schaumstoff und Dekormaterial in ein Blasformwerkzeug eingebracht und in diesem durch Fixierstifte oder einen an der Innenwand der Form im Bereich des Verbund-Dekorelements 6 erzeugten Unterdruck gehalten.

Nach Extrusion eines Kunststoffschlauches in das Blasformwerkzeug und Schließen desselben wird in den geschlossenen Kunststoffschlauch Luft eingeblasen. Dabei legt sich die Außenwand des Kunststoffschlauchs mit ihrer noch aufgeschmolzenen Oberfläche an die Konturen des Blasformwerkzeugs und des vorgeformten Verbund-Dekorelements 6 und geht eine innige Schmelz-Schweißverbindung mit der Schaumstoffschicht 2 des Verbund-Dekorelements 6 ein.

Die Erfindung ist nicht auf das zuvor beschriebene Ausführungsbeispiel beschränkt. So sind für die Schaumstoffschicht 2 außer den genannten auch andere Materialkombinationen möglich und als Dekormaterial können auch thermoplastische Polyolefin-Folien (TPO) und andere Kunststoffe, aber auch Leder, Kunstleder u.ä. eingesetzt werden.

Schließlich kann das Verbund-Dekorelement 6 auch als nicht vorgeformtes, sondern planes Element ausgebildet sein. Das gegebenenfalls vorgewärmte plane Verbund-Dekorelement wird in der Blasform fixiert und während der Blasformgebung durch den Überdruck in dem frisch extrudierten Kunststoffschlauch zusammen mit diesem verformt und mit der freien Fläche der Schaumstoffschicht 2 mit der Außenseite des Bauteils 1 verschmolzen.

## Patentansprüche

1. Verfahren zur Herstellung von Kunststoff-Bauteilen, die durch Blasformen ausgebildet und vorzugsweise an Teilflächen mit einem Dekormaterial (3) beschichtet werden, wobei zunächst das Dekormaterial (3) im katten bzw. erwärmten Zustand verpreßt wird und das so hergestellte Verbund-Dekorelement (6) in ein Blasformwerkzeug eingebracht und beim Blasformen des Bauteils (1) mit dessen Außenfläche verpreßt und verschmolzen wird und während der Blasformgebung in dem dem Rand des Verbund-Dekorelementes (6) entsprechenden Bereich des Bauteils (1) eine Ziernut (5) zur Aufnahme des Randes des Verbund-Dekorelementes (6) ausgeformt wird.

2. Verfahren nach Anspruch 1, **dadurch gekennzeichnet, daß** das Verbund-Dekorelement (6) entsprechend der Kontur im Bereich der zu beschichtenden Teilfläche des Bauteils (1) separat vorgeformt wird und der extrudierte Kunststoffschlauch während des Blasformens an die vorgeformte Kontur angeformt wird.

3. Verfahren nach Anspruch 1, **dadurch gekennzeichnet, daß** das Verbund-Dekorlement (6) plan ausgebildet und beim Blasformen des Bauteils (1) gemeinsam mit diesem geformt wird.

4. Verfahren nach Anspruch 3, **dadurch gekennzeichnet, daß** das plan ausgebildete Verbund-Dekorelement (6) vor dem Blasformvorgang erwärmt wird.

5. Verfahren nach einem der Ansprüche 1 bis 4, **dadurch gekennzeichnet, daß** das Verbund-Dekorelement (6) vor dem Blasformvorgang beschnitten wird.

6. Verfahren nach einem der Ansprüche 1 bis 5, **dadurch gekennzeichnet, daß** das Bauteil (1) samt schaumstoffhinterfütterter Dekorschicht aus einem Einstoff-System gefertigt wird.

7. Verfahren nach Anspruch 6, **dadurch geknnzeichnet, daß** für das Bauteil (1) Polypropylen, die Schaumstoffschicht (2, 4) extrudiertes oder expandiertes Polypropylen und für das Dekormaterial (3) ein PolypropylenTextil verwendet wird.

8. Verfahren nach einem der Ansprüche 1 bis 7, **dadurch gekennzeichnet, daß** zwei oder mehrere Schaumstoffschichten aus extrudiertem und/oder expandiertem Polypropylen miteinander und mit dem Dekormaterial zu einem Verbund-Dekorelement verpreßt und verschmolzen werden.

9. Verfahren nach einem der Ansprüche 1 bis 5, **gekennzeichnet durch** die Verwendung von thermoplastischer Polyolefin-Folie und anderen ähnlichen thermoplastischen Stoffen oder von Leder, Kunstleder, textilem Gewebe und dergleichen als Dekormaterial.

10. Verfahren nach einem der Ansprüche 1 bis 9, **dadurch gekennzeichnet, daß** bei der Blasformgebung in die Außenfläche des Bauteils (1) Oberflächenstrukturen eingeformt werden.

## Claims

1. Method of producing synthetic material components, which are formed by blow moulding and are preferably coated at part surfaces with a decorative material (3), wherein initially the decorative material (3) is pressed in the cold or heated state and the thus-produced compound decorative element (6) is introduced into a blow-moulding tool and during blow-moulding of the component (1) is pressed and fused together with the outer surface thereof and during the shaping by blow moulding an ornamentation groove (5) for reception of the edge of the compound decorative element (6) is formed in the region of the component (1) corresponding to the edge of the compound decorative element (6).

2. Method according to claim 1, **characterised in that** the compound decorative element (6) is separately preshaped in correspondence with the contour in the region of the part surface of the component (1) to be coated and the extruded synthetic material hose is moulded onto the preshaped contour during the blow moulding.

3. Method according to claim 1, **characterised in that** the compound decorative element (6) is constructed to be flat and during blow moulding of the component (1) is formed in common therewith.

4. Method according to claim 3, **characterised in that** the compound decorative element (6) constructed to be flat is heated before the blow-moulding process.

5. Method according to one of claims 1 to 4, **characterised in that** the compound decorative element (6) is trimmed before the blow-moulding process.

6. Method according to one of claims 1 to 5, **characterised in that** the component (1) together with decorative layer coated at the back with foam material is made from a one component system.

7. Method according to claim 6, **characterised in that** polypropylene is used for the component (1), extruded or expanded polypropylene is used for the foam material layer (2, 4) and a polypropylene textile is used for the decorative material (3).

8. Method according to one of claims 1 to 7, **characterised in that** two or more foam material layers of extruded and/or expanded polypropylene are pressed and fused with one another and with the decorative material into a compound decorative element.

9. Method according to one of claims 1 to 5, **characterised by** the use of thermoplastic polyolefin foil and other similar thermoplastic substances or of leather, artificial leather, textile fabric and the like as decorative material.

10. Method according to one of claims 1 to 9, **characterised in that** surface structures are formed in the outer surface of the component (1) during the shaping by blow moulding.

## Revendications

1. Procédé de fabrication de composants en matière plastique fabriqués par soufflage, et, de préférence, recouverts partiellement d'un matériau décoratif (3), selon lequel le matériau décoratif (3) est d'abord préalablement compressé à froid ou à chaud, et l'élément décoratif composite (6) ainsi réalisé est introduit dans un moule de formage, et pressé et ramolli pendant la formation du composant (1) par soufflage, sur la surface extérieure de celui-ci, et pendant le soufflage est formée dans la zone du composant (1) correspondant au bord de l'élément décoratif composite (6), une gorge décorative (5) sur laquelle vient se plaquer le bord de l'élément décoratif composite (6).

2. Procédé selon la revendication 1,
**caractérisé en ce que**
l'élément décoratif composite (6) correspondant au contour de la zone de la surface partielle à recouvrir du composant (1) est préformé séparément, et le tube de plastique extrudé est formé pendant le soufflage, sur le contour préformé.

3. Procédé selon la revendication 1,
**caractérisé en ce que**
l'élément décoratif composite (6) est d'abord réalisé en plan, puis formé avec le composant (1) pendant le soufflage de celui-ci

4. Procédé selon la revendication 1,
**caractérisé en ce que**
l'élément décoratif composite (6) réalisé en plan est réchauffé avant le processus de soufflage.

5. Procédé selon la revendication 1,
**caractérisé en ce que**
l'élément décoratif composite (6) est découpé avant le processus de soufflage.

6. Procédé selon l'une des revendications 1 à 5,
**caractérisé en ce que**
le composant (1), y compris sa couche décorative avec garnissage arrière de mousse, est réalisé suivant un système composé d'un seul matériau.

7. Procédé selon la revendication 6,
**caractérisé en ce qu'**
on utilise pour le composant (1) un polypropylène, pour la couche de mousse (2, 4) un polypropylène extrudé ou expansé et pour le matériau décoratif (3), un textile-polypropylène.

8. Procédé selon l'une quelconque des revendications 1 à 7,
**caractérisé en ce que**
deux ou plusieurs couches de mousse de polypropylène extrudé et/ou expansé sont compressées et ramollies entre elles et avec le matériau décoratif pour former un élément décoratif composite.

9. Procédé selon l'une quelconque des revendications 1 à 5,
**caractérisé en ce qu'**
on utilise pour le matériau décoratif, une feuille de polyoléfine thermoplastique et d'autres matériaux thermoplastiques similaires, ou du cuir, cuir synthétique, tissus textiles ou similaires.

10. Procédé selon l'une quelconque des revendications 1 à 9,
**caractérisé en ce que**
au cours du processus de soufflage se forment sur la surface externe du composant (1), des structures superficielles.
